# EUROPEAN PATENT SPECIFICATION

(11) **EP 0 299 717 B1**
(45) Date of publication and mention of the grant of the patent: **27.10.1993**
(21) Application number: 88306356.2
(22) Date of filing: 12.07.1988
(51) Int. Cl.: G11B 15/60, G11B 15/61, G11B 15/43, G11B 15/665

(54) **Tape stabilisation in recording and/or reproducing apparatus**
Bandstabilisierung in einem Aufzeichnungs- und/oder Wiedergabegerät
Stabilisation de bande dans un appareil d'enregistrement et/ou reproduction

(30) Priority: 15.07.1987 JP 176586/87
(43) Date of publication of application: 18.01.1989
(73) Proprietor: SONY CORPORATION, Tokyo 141 (JP)
(72) Inventor: Usui, Hayao Patent Division Sony Corporation, Shinagawa-ku Tokyo 141 (JP); Mogi, Satoshi Patent Division Sony Corporation, Shinagawa-ku Tokyo 141 (JP)
(74) Representative: Cotter, Ivan John

(56) References cited:
- GB-A- 2 078 431
- GB-A- 2 087 629
- PATENT ABSTRACTS OF JAPAN vol. 6, no. 104 (P-122)(982) 15 June 1982, & JP-A-57 036456
- PATENT ABSTRACTS OF JAPAN vol. 8, no. 237 (P-310)(1674) 30 October 1984, & JP-A-59 112453

## Description

This invention relates to stabilisation of tapes in recording and/or reproducing apparatus, such as video tape recorder (VTRs).

In general, stability of magnetic tape travel or motion in a VTR influences wow/flutter of reproduced audio signals and instability can result in fluctuation of control signals to cause jitter. To achieve the desired stability, some VTRs have an impedance roller for stabilising the travel of the magnetic tape.

When a magnetic tape cassette is loaded into a conventional VTR, a pivotal closure lid is automatically pivoted away from the front surface of the tape cassette to expose the magnetic tape, and a set of tape guide posts provided in the VTR guide the exposed tape onto a rotary head drum so that the tape is wrapped helically about at least a portion of the periphery of the drum. Another section of the tape between two of the guide posts is brought into engagement with a full width erase head.

During reproduction or recording, the tape is withdrawn from a supply reel table in the tape cassette and driven across surfaces of the guide posts, the erase head and the drum. Longitudinal vibration of the tape tends to be generated at the positions of contact between the tape and the erase head and guide post. This causes jitter or fluctuation of the video signal, thereby producing a fluctuating picture. In particular, when an improved magnetic tape having a high grade magnetic layer and a mirror surface film layer on the back surface thereof, such as a metal tape, is used, the longitudinal vibrations of the tape tend to be much greater than with normal tape. The reasons is that the tape sections contacting the surface of the full width erase head and the guide posts located at the supply reel table side tend to stick. This is due to the relatively high coefficient of friction of such tape. Thus, so-called "stick-slip" at the contact surfaces generates longitudinal vibrations in the tape which induce jitter in the signal. It will be appreciated that reduction of the longitudinal vibration of the tape on the periphery of the rotary head drum is important in order to record or reproduce a high quality picture.

Therefore, while there is no very serious problem when a normal type of magnetic tape is used in a conventional VTR, in order to obtain a high quality picture in a VTR which is compatible with high quality tape it would be desirable for the VTR to comprise an effective means for attenuation of the longitudinal vibration of the tape generated at the erase head etc. located in the vicinity of the rotary head drum.

Patent Specification JP-A-57036456 discloses a cylindrical tape guide post including end stop flanges to control the width-wise position of the tape, an intermediate portion of the post which contacts the tape being rotatable and being connected to an impedance roller so that longitudinal vibration of the tape is absorbed by the impedance roller.

According to the invention there is provided a stabiliser unit, to damp longitudinal vibration of a magnetic tape, the unit being provided in a recording and/or reproducing apparatus including a magnetic head, the unit comprising:
a roller to be disposed within a small space in the vicinity of the rotary head drum and arranged so as to be in contact with a surface of the magnetic tape: and
a holder, provided at one end of the roller, to detachably receive the weight; characterised in that the holder comprises at least two barbed portions made of elastic material to establish firm engagement with the weight and a locating portion to fix the weight so as not to rotate with respect to the roller.

Such a tape stabiliser unit can effectively damp longitudinal vibrations of a magnetic tape and can be easily mounted in a small space in the vicinity of a rotary head drum in a VTR.

The invention will now be further described, by way of illustrative and non-limiting example, with reference to the accompanying drawings, in which:
Figure 1 is an explanatory illustration of a previously proposed stabiliser unit or mechanism for a magnetic tape in a recording and/or reproducing apparatus such as a VTR;
Figure 2 is a graph showing a vibration frequency analysis of a coated-type magnetic tape (such as a metal tape) recorded in a VTR having no stabiliser mechanism;
Figure 3 is a graph showing a vibration frequency analysis of a coated-type magnetic tape (such as a metal tape) recorded in a VTR including a stabiliser mechanism;
Figure 4 is a perspective view of a stabiliser mechanism according to a preferred embodiment of the invention;
Figures 5 to 7 are vertical sectional views of the stabiliser mechanism shown in Figure 4;
Figure 8 is a schematic plan view of the stabiliser mechanism shown in Figure 4; and

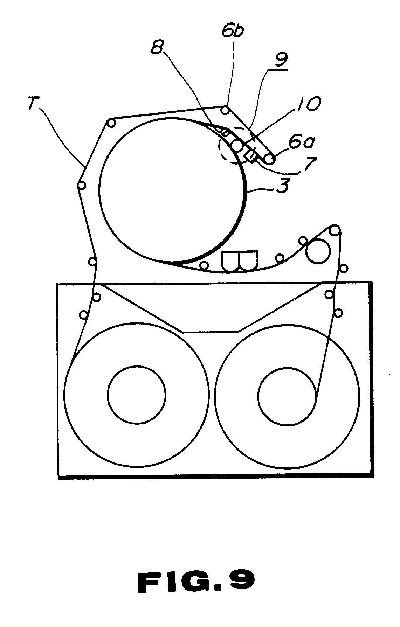

Figure 9 is a schematic plan view of the stabiliser, showing it provided in a VTR having a so-called U-type loading mechanism.

In order to facilitate understanding of a stabiliser unit or mechanism (described below) according to a preferred embodiment of the invention, provided in a recording and/or reproducing apparatus such as a VTR for stabilising a magnetic tape, the function of a previously proposed such stabiliser mechanism will first be described.

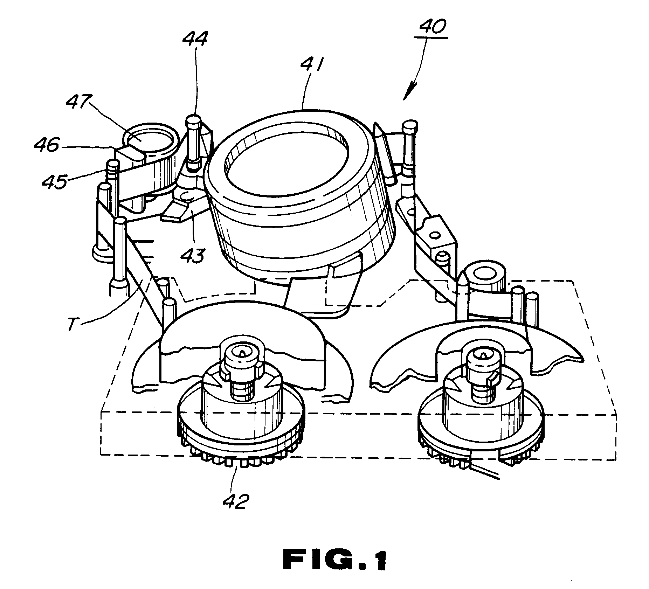

Figure 1 shows the previously proposed stabiliser mechanism incorporated in a VTR 40 including a so-called M-type loading mechanism well known in the art.

When a magnetic tape cassette containing a magnetic tape T is loaded in the VTR 40, the loading mechanism, which comprises a guide post 44 fixed on a mounting member 43 and a guide post 45 provided in a tape driving system, draws the tape T towards a rotary head drum 41, positioning the guide posts 44 and 45 with a distance defined therebetween. A section of the tape T is wrapped helically on the drum 41. A full width erase head 46 for erasing signals recorded over the tape T is interposed between the guide posts 44 and 45. A cylindrical guide roller (impedance roller) 47 having a relatively large diameter, which functions as a stabiliser of the stabiliser mechanism, is installed near the erase head 46.

As noted previously, longitudinal vibration of the tape tends to be generated at the position where the erase head 46 and the guide post 45 contact the surface of the tape T and this vibration is transmitted to the tape section on the drum 41, causing jitter. Through the rotatable engagement with the guide roller 47, the longitudinal vibration of the tape is transmitted to the guide roller. As a result, the vibration is damped, thereby controlling jitter and fluctuation of a picture to reduce colour shading.

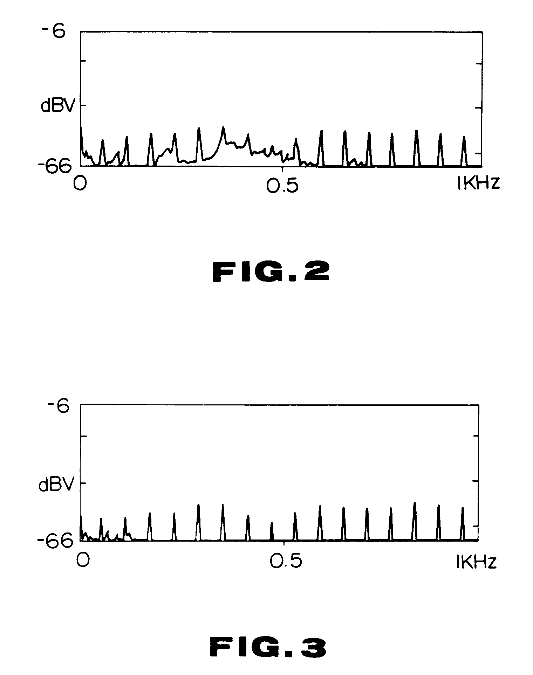

The effect of the inclusion of the guide roller 47 as a stabiliser in a VTR provided with a U-type loading mechanism is shown in Figures 2 and 3. Figure 2 shows the results of frequency analysis, obtained by means of a jitter meter, of vibration of a metal tape in a VTR not having a tape stabiliser, wherein the horizontal axis indicates frequency (kHz) and the vertical axis indicates amplitude (dBv). Figure 3 shows the results of frequency analysis, obtained by means of a jitter meter, of vibration of a metal tape in a VTR having a tape stabiliser, wherein, similarly to Figure 2, the horizontal axis indicates frequency (kHz) and the vertical axis indicates amplitude (dBv).

It will be appreciated that the results show that fluctuation of a picture or jitter occurs within the range from 200 to 500Hz when no stabiliser is provided, while, when a stabiliser is provided, jitter does not occur. In addition, it will be noted that providing the stabiliser in the vicinity of the rotary head drum is most effective for damping longitudinal vibration of the tape thereon.

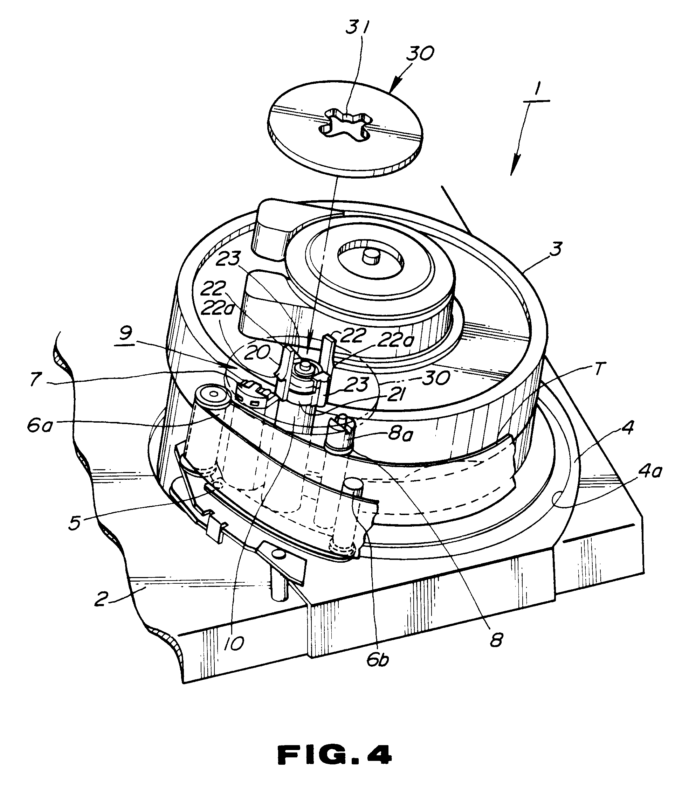

Figure 4 shows the stabiliser unit or mechanism according to the preferred embodiment of the invention, the stabiliser mechanism including a guide roller 10 which functions as a stabiliser and is designed for easy installation within a small space.

Figure 4 shows a VTR provided with a so-called U-type loading mechanism and with rotary head drum 3, installed on a chassis 2, which comprises a rotatable upper section and a stationary lower section. A plurality of magnetic heads (not shown) are provided on the peripheral surface between the upper and the lower sections. A guide rail 4 having a guide groove 4a formed at an upper end surface thereof is arranged around the drum 3. A pair of base plates 5 are arranged to be movably guided via the groove 4a. The base plates 5 are slidably movable along the groove 4a by means of a driving mechanism (not shown) provided with a ring gear. A guide roller 6a is rotatably mounted on an end of a lower one of the base plates 5, while a guide pole 6b is mounted at the opposite end to the roller 6a on an upper one of the base plates 5.

A full width erase head 7 and a guide pole 8 are disposed in the vicinity of the guide roller 6a and the guide pole 6b located on the upper surface of guide rail 4 at a loading end position, that is in front of the position where the tape T first contacts the periphery of the rotary head drum 3. The erase head 7 erases all signals recorded over the tape T before rerecording by means of the rotary head. The guide pole 8 includes a flange 8a on its upper end, which flange functions as height adjusting means for restricting the height of the tape T. Installed between the full erase head 7 and the guide pole 8 is a tape stabiliser unit or mechanism 9. The tape stabiliser unit 9 is positioned slightly after the erase head 7 in the tape path and contacts the surface of the tape T. The stabiliser unit 9 preferably tensions the tape T to a certain extent and restricts jitter or fluctuation of the VTR signal by damping longitudinal vibration of the tape immediately before the position where it contacts the periphery of the rotary head drum 3.

The tape stabiliser unit 9 comprises the above-mentioned guide roller 10, a holder 20 and a weight 30 and is rotatably supported on the guide rail 4. The guide roller 10, in cooperation with the guide pole 8, guides the tape T to the rotary head 3. Tile holder 20 is fixed at the upper end portion of the guide roller 10. The weight 30 is detachably supported by the holder 20. The holder 20 including the weight 30 could be installed on the upper end of the flange 8a as a height adjusting means so as to function as a stabiliser and height adjusting means. Alternatively, a flange may be provided on the guide roller 10 and the guide pole 8 may be omitted.

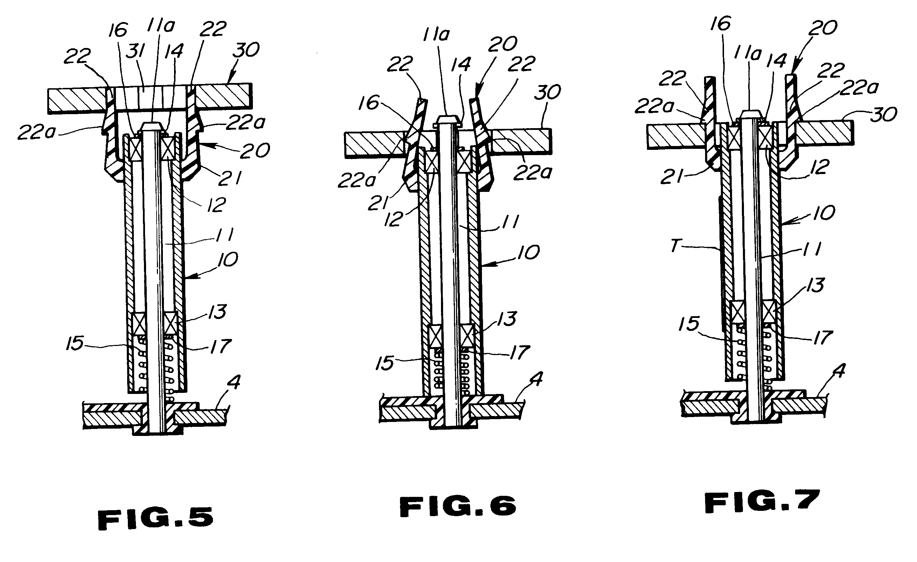

The tape stabiliser unit will now be described in more detail with reference to Figures 4 to 8, of which Figures 5 to 7 show respective stages in the procedure for installing the weight 30 on the holder 20.

The guide roller 10 is in the form of a hollow cylinder having a relatively small diameter. The roller 10 is rotatably supported by an axle 11 fixed on the guide rail 4 via radial roller bearings 12 and 13. The bearings 12 and 13 are supported on the upper and lower ends of the axle 11. Interposed between the lower side of the installed bearing 13 and the guide rail 4 is a coil spring 15 with a O-ring 17. The coil spring 15 urges the guide roller 10 upwardly so that the upper bearing 12 is urged against the bottom of a head (flange portion) 11a of the axle 11 via an O-ring 16 and a washer 14.

The holder 20 is made of an elastic synthetic resin and comprises a ring-shaped engaging portion 21 for engaging the upper outer surface of the guide roller 10, a pair of barbed portions 22, and a pair of locating lugs 23. The locating lugs 23 are positioned at right angles with respect to the barbed portions 22 and extend upwardly a little from the engaging portion 21. The locating lugs 23 prevent the weight 30 from rotating relative to the holder 20. The weight 30 is in the form of a disc having a relatively large diameter with respect to that of the guide roller 10 and including an engaging opening 31 at its centre. The shape of the opening 31 corresponds to that of the engaging portion 21 so that it may suitably receive and engage the pair of barbed portions 22 and the pair of locating lugs 23. The distance between the opposed outer surface parts of the engaging portion 21 increases a little in the downward direction in order to prevent the weight 30 from sliding downwardly on the holder 20, and barbs 22a of the barbed portions prevent the weight 30 from moving upwardly, once it is installed, thereby fixing the weight 30 in place.

It will be appreciated that the weight 30 may be easily installed on and removed from the guide roller 10 by means of the holder 20.

Since the diameter of the guide roller 10 is relatively small, so that it is suitable for location in a small space, while the diameter of the weight 30 is relatively great, the stabiliser unit or mechanism 9 may be installed easily in a small space in the vicinity of the rotary head drum 3, in this case the small space defined between the tape and the periphery of the head drum 3, so as effectively to damp longitudinal vibration of the magnetic tape T. It will be noted that, for example, even when high grade mirror-surfaced metal tape is used in a VTR fitted with the stabiliser unit, longitudinal vibration may easily be dampened, thereby preventing jitter or fluctuation of the signal from occurring when recording or reproducing.

The procedure for installing the weight 30 on the holder 20 will now be described. The weight 30 is fitted over the upper portion of the holder 20 having the locating lugs 23 and the barbed portions 22. The weight 30 is then pressed downwardly causing elastic inward deformation of the barbed portions 22 received in the opening 31. At the same time, the guide roller 10 tends to be forced down to the surface of the guide rail 4, against the biassing force of the coil spring 15, due to the thrust force exerted on the weight 30. Thereafter, when the upper surface of the weight 30 reaches the lower ends of the barbs 22a, the barbed portions 22 expand outwardly so as to be returned towards their initial states so that the weight 30 is fixed at a predetermined position. It will be appreciated that, since the thrust force of the weight 30 when fitting to the holder 20 is absorbed by the coil spring 15 and the lower edge of the guide roller 10, the weight 30 easily may be installed on the holder 20 without any damage to the roller bearings 12 and 13. Also, the weight 30 can easily be removed from the holder 20 by elastically deforming the barbed portions 22 inwardly a little so as to disengage the barbs 22a from the weight 30, thus facilitating easy adjustment of the flange 8a, provided on the guide pole 8, which functions as a height adjusting means for adjusting the height of the tape.

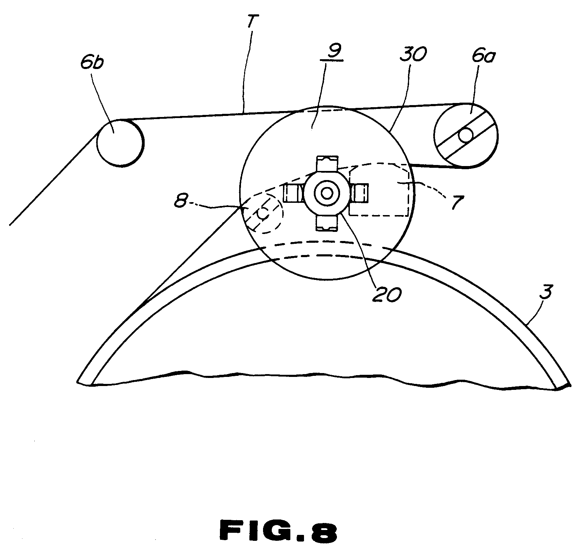

In the assembled VTR, the guide rollers (for example the guide roller 8 shown in Figure 8) for the tape, which are located within a small space around the rotary head drum, must be adjusted precisely. Therefore, easy installation and removal of the weight 30 is important in that it allows adjustment of the guide rollers to be performed easily.

Although the present invention has been described in connection with stabiliser unit or mechanism for a so-called U-type loading mechanism, it should be noted that the stabiliser unit or mechanism is also applicable in so-called M-type loading mechanisms. Moreover, a metal bearing or a resin bearing may be used for rotatably supporting the stabiliser unit instead of the radial roller bearings used in the above-described embodiment. Also, although the weight takes the form of a disc in the above-described embodiment, the shape of the weight may be selected freely according to needs.

## Claims

1. A stabiliser unit, to damp longitudinal vibration of a magnetic tape, the unit (9) being provided in a recording and/or reproducing apparatus including a magnetic head, the unit (9) comprising:
a roller (10) to be disposed within a small space in the vicinity of the rotary head drum and arranged so as to be in contact with a surface of the magnetic tape (T); and
a holder (20), provided at one end of the roller (10), to detachably receive the weight (30); characterised in that the holder (20) comprises at least two barbed portions (22) made of elastic material to establish firm engagement with the weight (30) and a locating portion (23) to fix the weight so as not to rotate with respect to the roller (10).

2. A unit according to claim 1, wherein the roller (10) comprises an axle (11) rotatably and detachably supporting it.

3. A unit according to claim 1 or claim 2, wherein the roller (10) comprises height adjusting means to restrict the height of the magnetic tape (T).

4. A unit according to any one of claims 1 to 3, wherein the diameter of the roller (10) is smaller than that of the weight (30).

5. A unit according to claim 1, wherein elastic deformation of the barbed portions (22) allows the weight (30) to be removed.

6. A unit according to any one of claims 1 to 5, wherein the weight (30) has an opening (31) formed to correspond to the barbed portions (22) and the locating portion (23).

7. A unit according to any one of claims 1 to 6, comprising a spring (15) interposed between a mechanical chassis (4, 2) provided in the recording and/or reproducing apparatus and one end of the roller (10) so as to urge the roller away from the chassis.

8. A unit according to any one of claims 1 to 7, wherein the weight (30) is in the form of a disc.

## Patentansprüche

1. Stabilisiereinheit zur Dämpfung der Longitudinalschwingung eines Magnetbandes, wobei die Einheit (9) in einer Aufzeichnungs- und/oder Wiedergabeeinrichtung vorgesehen ist, die einen Magnetkopf aufweist, wobei die Einheit (9) umfaßt:
eine Rolle (10), die innerhalb eines kleinen Zwischenraums in der Nähe der Magnetkopftrommel angeordnet ist und derart angeordnet ist, daß sie mit einer Oberfläche des Magnetbandes (T) in Kontakt ist; und
einen Halter (20), der an einem Ende der Rolle (10) vorgesehen ist, um abnehmbar das Gewicht (30) aufzunehmen;
**dadurch gekennzeichnet**,
daß der Halter (20) wenigstens zwei mit Widerhaken versehene Teile (22) aus elastischem Material aufweist, um eine feste Verbindung mit dem Gewicht (30) herzustellen sowie einen Lageteil (23), um das Gewicht zu fixieren, so daß es sich nicht in Bezug auf die Rolle (10) verdreht.

2. Einheit nach Anspruch 1, wobei die Rolle (10) eine Achse (11) aufweist, die sie drehbar und abnehmbar lagert.

3. Einheit nach Anspruch 1 oder Anspruch 2, wobei die Rolle (10) Höhe einstellende Mittel aufweist, um die Höhe des Magnetbandes (T) zu begrenzen.

4. Einheit nach einem der Ansprüche 1 bis 3, wobei der Durchmesser der Rolle (10) kleiner als der des Gewichtes (30) ist.

5. Einheit nach Anspruch 1, wobei eine elastische Verformung der mit Widerhaken versehenen Teile (22) dem Gewicht (30) es ermöglicht, daß es entfernt werden kann.

6. Einheit nach einem der Ansprüche 1 bis 5, wobei das Gewicht (30) eine Öffnung (31) hat, die so geformt ist, daß sie den mit Widerhaken versehenen Teilen (22) und dem Lageteil (23) entspricht.

7. Einheit nach einem der Ansprüche 1 bis 6 mit einer Feder (15), die zwischen einem mechanischem Chassis (4, 2), das in der Aufzeichnungs und/oder Wiedergabevorrichtung vorgesehen ist, und einem Ende der Rolle (10) eingelegt ist, um somit die Rolle von Chassis wegzudrücken.

8. Einheit nach einem der Ansprüche 1 bis 7, wobei das Gewicht (30) die Form einer Scheibe aufweist.

## Revendications

1. Unité stabilisatrice, pour amortir la vibration longitudinale d'une bande magnétique, l'unité (9) étant disposée dans un appareil d'enregistrement et/ou de reproduction incluant une tête magnétique, l'unité (9) comprenant :
un galet (10) à placer dans un espace réduit au voisinage du tambour à têtes tournantes et disposé de manière à être en contact avec la surface de la bande magnétique (T) ; et,
un support (20), placé à une extrémité du galet (10) pour recevoir de façon amovible un poids (30) ; caractérisé en ce que le support (20) comprend au moins deux parties barbelées (22) faites d'une matière élastique pour établir une prise ferme avec le poids (30), et une partie de positionnement (23) pour fixer le poids de manière à ce qu'il ne tourne pas par rapport au galet (10).

2. Unité selon la revendication 1, dans laquelle le galet (10) comprend un axe (11) mobile en rotation et le supportant de manière amovible.

3. Unité selon la revendication 1 ou la revendication 2, dans laquelle le galet (10) comprend un moyen de réglage en hauteur pour limiter la hauteur de la bande magnétique (T).

4. Unité selon l'une quelconque des revendications 1 a 3, dans laquelle le diamètre du galet (10) est plus petit que celui du poids (30).

5. Unité selon la revendication 1, dans laquelle la déformation élastique des parties barbelées (22) permet au poids (30) d'être retiré.

6. Unité selon l'une quelconque des revendications 1 à 5, dans laquelle le poids (30) possède une ouverture (31) conformée pour correspondre aux parties barbelées (22) et à la partie de positionnement (23).

7. Unité selon l'une quelconque des revendications 1 à 6, comprenant un ressort (15) interposé entre un châssis mécanique (4, 2) disposé dans l'appareil d'enregistrement et/ou de reproduction, et une extrémité du galet (10) de manière à écarter le galet du châssis.

8. Unité selon l'une quelconque des revendications 1 à 7, dans laquelle le poids (30) a la forme d'un disque.
